# EUROPEAN PATENT APPLICATION

(11) **EP 4 525 160 A1**
(43) Date of publication of application: **19.03.2025**
(21) Application number: 23926626.5
(22) Date of filing: 31.10.2023
(51) Int. Cl.: H01M 50/244

(54) **BATTERY CELL TRAY AND BATTERY MODULE**

(30) Priority: 31.07.2023 CN 202322048220 U
(71) Applicant: Eve Energy Co., Ltd., Huizhou, Guangdong 516006 (CN)
(72) Inventor: WENG, Xingqiu, Huizhou, Guangdong 516006 (CN); YANG, Xingrui, Huizhou, Guangdong 516006 (CN); HUANG, Liliang, Huizhou, Guangdong 516006 (CN); YANG, Songlin, Huizhou, Guangdong 516006 (CN)
(74) Representative: Herrero & Asociados, S.L.
(86) International application number: PCT/CN2023/128266
(87) International publication number: WO 2025/025379

(57) **Abstract**

The present disclosure relates to a cell tray and a battery module. The cell tray includes a support portion, a folded edge portion, and a sidewall portion. The support portion defines a plurality of first through holes, and the plurality of first through holes are in a one-to-one correspondence with cells. The folded edge portion is disposed on a periphery of the support portion and arranged with a first bulge assembly, and the first bulge assembly is configured to provide a gripping point to an assembly equipment. The sidewall portion is disposed between the support portion and the folded edge portion and arranged with a chamfered structure. The above design is conducive to the stamping and molding of the cell tray and improves the utilization of the internal space of the cell tray.

## Description

The present application claims priority of Chinese Patent Application No. 202322048220.9, filed on July 31, 2023, in the China National Intellectual Property Administration, the entire contents of which are hereby incorporated by reference in its entirety.

### TECHNICAL FIELD

The present disclosure relates to the technical field of batteries, and in particular to a cell tray and a battery module.

### BACKGROUND

A cell refers to a single electrochemical battery including positive and negative electrodes, which may be categorized into an aluminum shell cell, a soft pack cell (also known as "polymer cell"), a cylindrical cell, etc. Due to the small capacity of a single cell, it is often necessary to assemble multiple cells in series or parallel on a cell tray to form a cell module for larger capacity applications.

In the related art, in the design process of battery modules, the cell tray is usually formed by welding steel plates, and thus the weight of the cell tray is large, which reduces the energy density of the battery pack. Further, the utilization rate of the space inside the cell tray is low, and the assembly of the cell tray is cumbersome, with low assembly precision.

### SU MMARY OF THE DISCLOSURE

The present disclosure provides a cell tray, including
a support portion, defining a plurality of first through holes; the plurality of first through holes are in a one-to-one correspondence with cells;
a folded edge portion, disposed on a periphery of the support portion and arranged with a first bulge assembly; the first bulge assembly is configured to provide a gripping point to an assembly equipment; and
a sidewall portion disposed between the support portion and the folded edge portion and arranged with a chamfered structure.

The present disclosure further provides a battery module including a plurality of cells and the cell tray as above; the plurality of cells are arranged on the cell tray.

### BRIEF DESCRIPTION OF THE DRAWINGS

FIG. 1 is a structural schematic view of a cell tray according to some embodiments of the present disclosure in a first viewing angle.
FIG. 2 is a partially enlarged view at A in FIG. 1.
FIG. 3 is a structural schematic view of a cell tray according to some embodiments of the present disclosure in a second viewing angle.
FIG. 4 is a partially enlarged view at B in FIG. 3.
FIG. 5 is a cross-sectional view of a cell tray according to some embodiments of the present disclosure.

### Reference numerals:

10, support portion; 100, first through hole; 20, folded edge portion; 200, first bulge assembly; 202, first bulge; 210, first folded edge; 220, second folded edge; 232, second bulge; 234, second through ole; 242, third bulge; 244, third through ole; 246, connection member; 250, positioning hole; 260, fourth through hole; 270, direction-indicating slot; 30, sidewall portion; 300, chamfered structure.

### DETAILED DESCRIPTION

The terms "first", "second", etc. in the specification and claims of the present disclosure and the accompanying drawings described above are intended to distinguish similar objects and not necessarily to describe a particular order or sequence. It should be understood that the elements described with the above terms may be interchangeable, where appropriate, for the embodiments of the present disclosure described herein. In addition, the terms "including" and "having", and any variations thereof, are intended to cover non-exclusive inclusion, e.g., a process, method, system, product, or apparatus including a series of steps or units need not be limited to those steps or units that are clearly listed, but rather may include other steps or units that are not clearly listed or that are inherent to the process, method, product, or apparatus.

For the purposes of the present disclosure, the terms "top", "bottom", "left", "right", "front", "back", "top", "bottom", "inner ", "outside", "center", "vertical", "horizontal", "transverse", "longitudinal", etc. indicate an orientation or positional relationship based on that shown in the accompanying drawings. These terms are primarily intended to better describe the present disclosure and its embodiments, and are not intended to define that the indicated device, element, or component must have a particular orientation, or be constructed and operated in a particular orientation.

Moreover, some of the above terms may be intended to indicate other meanings in addition to the orientation or positional relationship, for example, the term "on" may further be intended to indicate a certain dependency or connection relationship in some cases. To those skilled in the art, the specific meaning of these terms in the present disclosure may be understood according to the specific circumstances.

In addition, the term "more than one" shall mean two and more than two.

It should be noted that the embodiments and the features in the embodiments in the present disclosure may be combined with each other without conflict. The present disclosure will be described in detail below with reference to the accompanying drawings and in connection with embodiments.

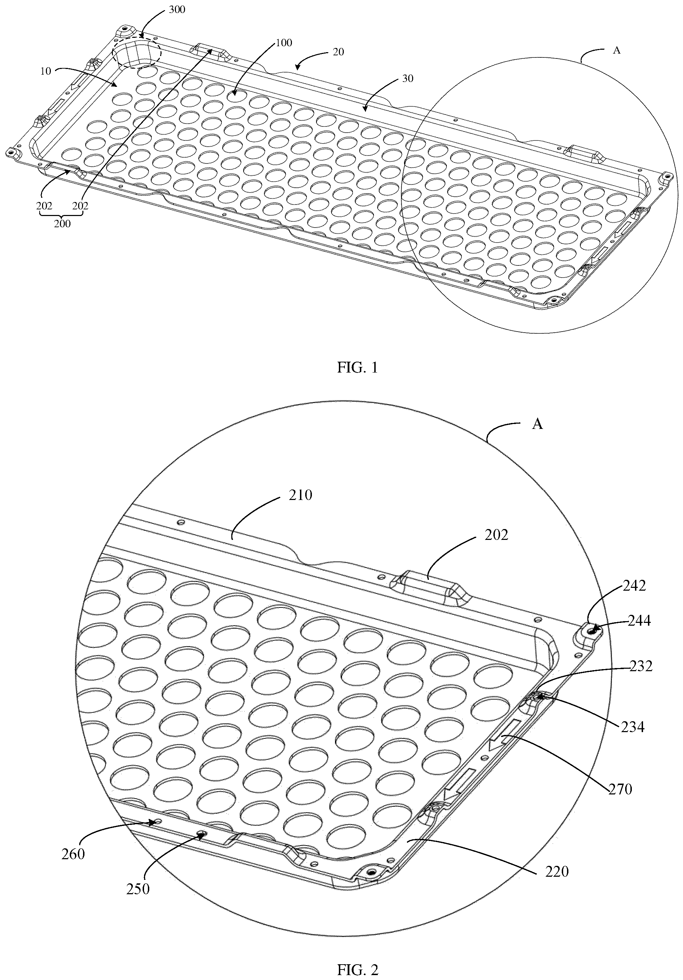

In some embodiments, as shown in FIG. 1, a cell tray is provided. The cell tray includes a support portion 10, a folded edge portion 20, and a sidewall portion 30. The support portion 10 defines multiple first through holes 100, and the multiple first through holes 100 are in a one-to-one correspondence with cells; the folded edge portion 20 is disposed on a periphery of the support portion 10, and the folded edge portion 20 is arranged with a first bulge assembly 200, the first bulge assembly 200 being configured to provide a gripping point to an assembly equipment; the sidewall portion 30 is disposed between the support portion 10 and the folded edge portion 20 and is arranged with a chamfered structure 300.

Each cell may be a cylindrical cell. The cell includes a cell bottom and a cell top, the cell top is arranged with a positive electrode, and the cell bottom may be arranged with a pressure relief valve. The support portion 10, the folded edge portion 20, and the sidewall portion 30 are disposed on the cell tray, and the support portion 10, the folded edge portion 20, and the sidewall portion 30 are in a one-piece structure. The support portion 10 may be of a plate structure, and the support portion 10 defines the first through holes 100, where the first through holes 100 may be configured for facilitating the discharge of thermal runaway gases through the corresponding first through holes 100 when thermal runaway occurs in the cells. For example, the multiple first through holes 100 on the support portion 10 may be spaced equidistant. Exemplarily, in order to further utilize the effective space of the support portion 10, the support portion 10 defines more first through holes 100; where the support portion 10 is arranged with multiple rows of first through holes 100, each row includes multiple first through holes 100, and the multiple first through holes 100 in each two adjacent rows are in a staggered spaced arrangement, thereby reducing the spacing of the first through holes 100 in the two adjacent rows, so as to make the support portion 10 arranged with more first through holes 100. The cell bottom is attached to a corresponding first through hole 100 of the support portion 10, and the pressure relief valve on the cell bottom is arranged facing the first through hole 100. Exemplarily, the size of a bottom surface of the cell bottom is larger than the size of the first through hole 100, and the size of the first through hole 100 is larger than the size of the pressure relief valve.

The folded edge portion 20 is arranged around the periphery of the support portion 10, and the folded edge portion 20 includes a folded edge formed by folding outward. The folded edge portion 20 is arranged with a first bulge assembly 200, where the first bulge assembly 200 may include multiple first bulges 202, each first bulge 202 protruding in a direction away from the support portion 10 and defining an inner cavity in a direction towards the support portion 10, and a manipulator of the assembly equipment is at least partially embedded in the inner cavity. By providing the first bulge assembly 200 at the folded edge portion 20, it is thereby convenient for the assembly equipment to grasp the first bulge assembly 200 by the manipulator, thereby facilitating the grasping and assembling of the cell tray. In some embodiments, a chamfer is formed between the first bulge 202 and the folded edge portion 20. In some embodiments, the first bulge 202 is prepared by integrally stamping and molding the folded edge portion 20.

The sidewall portion 30 is arranged around the periphery of the support portion 10, and the sidewall portion 30 is disposed between the support portion 10 and the folded edge portion 20. For example, the sidewall portion 30 is of an annular structure, and each corner of the sidewall portion 30 is arranged with the chamfered structures 300, which is conducive to the stamping and molding of the cell tray and avoids the problem that the radius of the corners is too large and the number of the first through holes 100 that can be provided in the corners of the support portion 10 is reduced due to the restriction of the minimum rounded corners in the stamping process when the corners are provided directly with the rounded structure. Thereby, the corner positions of the support portion 10 of the cell tray are fully utilized to provide more first through holes 100 on the support portion 10, which may improve the utilization of the internal space of the cell tray.

Exemplarily, the support portion 10 is of a rectangular shape, the folded edge portion 20 and the sidewall portion 30 are respectively arranged around the periphery of the support portion 10, and the sidewall portion 30 is disposed between the support portion 10 and the folded edge portion 20, thereby realizing the overall rectangular shape of the cell tray. In such cases, the support portion 10 has four corners, and the sidewall portion 30 and the folded edge portion 20 each have corresponding four corners, where the four corners of the support portion 10, the four corners of the sidewall portion 30, and the four corners of the folded edge portion 20 are provided one-to-one correspondingly. By chamfering the four corners of the sidewall portion 30, the four corners of the sidewall portion 30 are each with the chamfered structure 300, which is convenient for the support portion 10, the sidewall portion 30, and the folded edge portion 20 to be integrally stamped and molded. Furthermore, the chamfered structural space of the four corners may be fully utilized in the support portion 10 to provide more first through holes 100, such that the support portion 10 may be fitted with more cells, thereby increasing the energy density of the battery pack.

In the above embodiments, the support portion 10 defines multiple first through holes 100, and the multiple first through holes 100 are in a one-to-one correspondence with cells; the folded edge portion 20 is disposed on a periphery of the support portion 10, and the folded edge portion 20 is arranged with a first bulge assembly 200, the first bulge assembly 200 being configured to provide a gripping point to an assembly equipment; the sidewall portion 30 is disposed between the support portion 10 and the folded edge portion 20 and is arranged with a chamfered structure 300, to realize easy assembly of the cell tray and the cells. In the present disclosure, the support portion 10, the folded edge portion 20, and the sidewall portion 30 are disposed on the cell tray, with multiple first through holes 100 defined on the support portion 10, and the sidewall portion 30 is disposed between the support portion 10 and the folded edge portion 20, with each of the first through holes 100 corresponding to one cell; the chamfering structure 300 is arranged on the sidewall portion 30, which is conducive to the stamping and molding of the cell tray to improve the internal space utilization rate of the cell tray, such that more first through holes 100 can be defined on the support portion 10, and the support portion 10 can be fitted with more cells, thereby improving the energy density of the battery pack; the first bulge assembly 200 is arranged on the folded edge portion 20, which is convenient for the assembly equipment to grasp and assemble the cell tray through the first bulge assembly 200, such that the assembly of the cell tray is convenient and the assembly precision is improved.

In some embodiments, the cell tray may be a plate made of aluminum alloy of model AL5083-O, prepared by integrally stamping and molding. The overall thickness of the cell tray is set to 3 mm.

In some embodiments, the height of the sidewall portion 30 of the cell tray may be set to 42 mm, and the support portion 10 may be provided with 176 first through holes 100. For example, each first through hole 100 may be a circular hole with a diameter of 37 mm.

In some embodiments, as shown in FIG. 2, the folded edge portion 20 includes multiple first folded edges 210; the first bulge assembly 200 includes multiple first bulges 202; each first folded edge 210 is arranged with at least one of the multiple first bulges 202, and the first bulges 202 on the opposing first folded edges 210 are arranged in a staggered manner.

The width of the first folded edge 210 may be set according to actual assembly requirements. The number of the first folded edges 210 may be determined according to the shape of the folded edge portion 20. For example, for a rectangular shaped cell tray with the folded edge portion 20 of a rectangular shape, the folded edge portion 20 includes two first folded edges 210, with one first folded edge 210 being opposite to the other first folded edge 210. Each of the first folded edges 210 is arranged with at least one first bulge 202. The first bulges 202 on the opposing first folded edges 210 are arranged in a staggered position with respect to each other, which in turn is conducive to the manipulator of the assembly equipment grasping the corresponding first bulge 202, thereby realizing convenient assembly of the cell tray and improving the assembly precision.

Exemplarily, each of the two first folded edges 210 is arranged with two first bulges 202, and the first bulges 202 on the two first folded edges 210 are asymmetrical to each other, thereby making the first bulges 202 on the first folded edges 210 misaligned with each other, which is conducive to the manipulator of the assembly equipment grasping the corresponding first bulge 202, thereby realizing convenient assembly of the cell tray and improving the assembly precision.

In some embodiments, the folded edge portion 20 is further arranged with a second bulge assembly, the second bulge assembly being configured to provide a fixing point to a wire harness or a pipe.

The second bulge assembly may include multiple second bulges 232, and each second bulge assembly may be configured to facilitate the alignment of the wire harness of the cells or to facilitate the securing of the pipe of the battery module.

By providing the second bulge assembly at the folded edge portion 20, each cell is disposed on a corresponding first through hole 100 of the support portion 10, the cells are connected to form the battery module through the wire harness, and then the wire harness connected to the cells can be routed through the second bulge assembly, which facilitates fixing of the wire harness of the cells, thereby preventing the wire harness of the cells from being entangled together. In addition, the pipes laid on the battery module may be fixed by the second bulge assembly, for example, the pipes on the battery module may be bundled and fixed to the second bulges 232 by ties to prevent the pipes from loosening. The pipes may be liquid-cooling pipes.

Exemplarily, as shown in FIG. 2, the folded edge portion 20 further includes multiple second folded edges 220; the second bulge assembly includes multiple second bulges 232; each second folded edge 220 is arranged with at least one of the second bulges 232, and each second bulge 232 protrudes in a direction away from the support portion 10; a second through hole 234 is defined on a top of the second bulge 232, and the second through hole 234 is configured for the alignment of the wire harness or the securing of the pipe. In some embodiments, the second bulge 232 is prepared by integrally stamping and molding the folded edge portion 20.

The folded edge portion 20 is further arranged with the multiple second folded edges 220, and the width of the second folded edge 220 may be set according to the actual assembly requirements. The number of the second folded edges 220 may be determined according to the shape of the folded edge portion 20. For example, for a rectangular shaped cell tray with the folded edge portion 20 of a rectangular shape, the folded edge portion 20 includes two first folded edges 210 and two second folded edges 220, with one second folded edge 220 being opposite to the other second folded edge 220. Each of the second folded edges 220 is arranged with at least one second bulge 232, and each second bulge 232 on each of the second folded edges 220 defines the second through hole 234. The second through hole 234 may be configured to facilitate the alignment of the wire harness of the cells or to facilitate the securing of the pipe of the battery module.

Exemplarily, the second folded edge 220 is arranged with two second bulges 232, and each second bulge 232 defines a corresponding second through hole 234, such that the wire harnesses can be routed through the second through hole 234 on the corresponding second bulge 232, which facilitates fixing of the wire harness of the cells, thereby preventing the wire harness of the cells from being entangled together. In addition, the pipes laid on the battery module are bound with ties, and the ties may be secured through the second through holes 234 on the second bulges 232 to prevent the pipes from loosening. It is noted that each second through hole 234 on the second bulge 232 may be a circular hole with a diameter of 7 mm.

In some embodiments, the folded edge portion 20 is further arranged with a third bulge assembly, the third bulge assembly being configured to provide a lifting point to the assembly equipment.

The third bulge assembly may include multiple third bulges 242, and the third bulge assembly may be configured to facilitate lifting of the cell tray by the assembly equipment, which in turn facilitates later maintenance of the battery module.

By providing the third bulge assembly on the folded edge portion 20, each cell is mounted on a corresponding first through hole 100 of the support portion 10, and the cells are connected to form the battery module through the wire harness, such that when it is necessary to carry out inspection and maintenance on the battery module, the third bulge assembly can be grasped by the assembling equipment for lifting the cell tray, thereby facilitating the later maintenance of the battery module.

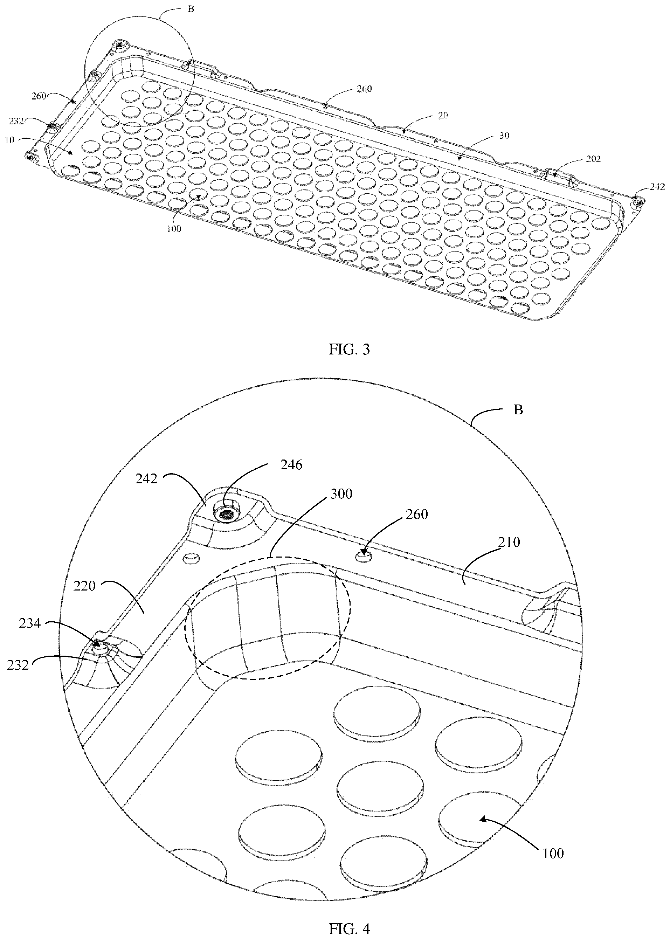

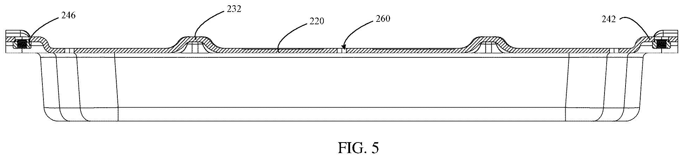

Exemplarily, as shown in FIGS. 3 and 5, the third bulge assembly includes multiple third bulges 242; the first folded edge 210 and the second folded edge 220 are arranged adjacent to each other; the third bulge 242 is arranged on a connection between the first folded edge 210 and the second folded edge 220, and the third bulge 242 protrudes in a direction away from the support portion 10 to define an inner cavity. In some embodiments, the third bulge 242 is prepared by integrally stamping and molding the folded edge portion 20.

The first folded edge 210 and the second folded edge 220 on the folded edge portion 20 are adjacent to each other, such that an end of the first folded edge 210 is connected to an end of the second folded edge 220, and the other end of the first folded edge 210 is connected to an end of the other second folded edge 220. For example, for a rectangular shaped cell tray with the folded edge portion 20 of a rectangular shape, the folded edge portion 20 includes two first folded edges 210 and two second folded edges 220, and the third bulge 242 is arranged on the connection of each set of the first folded edge 210 and the second folded edge 220 that are adjacent, such that the third bulges 242 are distributed and arranged at the four corners of the cell tray. When the battery module is required to be inspected and repaired, the four third bulges 242 of the cell tray can be grasped by the assembly equipment to realize the lifting of the cell tray, thereby facilitating the later maintenance of the battery module. It should be noted that the length of the first folded edge 210 is greater than the length of the second folded edge 220.

In some embodiments, as shown in FIGS. 2 and 4, the third bulge 242 defines a third through hole 244, and the third through hole 244 is arranged with a connection member 246.

The connection member 246 may be a nut. By providing the multiple third bulges 242 at the folded edge portion 20, each third bulge 242 defines a corresponding third through hole 244, and thus the connection member 246 may be arranged on the third bulge 242 through the corresponding third through hole 244. For example, the connection member 246 may be arranged on the third through hole 244 by means of pressure riveting, and when the battery module is required to be inspected and repaired, the four third bulges 242 of the cell tray may be grasped by the assembly equipment and the lifting and fixing of the cell tray may be carried out by means of the connection members 246, so as to facilitate the later maintenance of the battery module.

In some embodiments, as shown in FIGS. 2 and 4, the folded edge portion 20 further defines positioning holes 250 and multiple fourth through holes 260; each positioning hole 250 is defined on the first folded edge 210 or the second folded edge 220; the first folded edge 210 is provided with at least one fourth through hole 260, and the second folded edge 220 is provided with at least one fourth through hole 260.

The positioning holes 250 may be through holes on the cell tray for industrialized positioning datums. For example, the positioning holes 250 may be waist-shaped positioning holes 250. The fourth through holes 260 refer to module mounting holes, which may be configured for mounting and fixing the cell tray to a housing of the battery module; for example, the fourth through holes 260 may be circular holes.

The positioning holes 250 may be defined on the first folded edge 210 or the second folded edge 220, which in turn may be configured for quick positioning assembly based on positioning blocks to improve the assembly accuracy of the battery module. The folded edge portion 20 is provided with multiple fourth through holes 260, and the multiple fourth through holes 260 are distributed on the first folded edges 210 and the second folded edges 220, such that each first folded edge 210 is provided with at least one fourth through hole 260, and each second folded edge 220 is provided with at least one fourth through hole 260. Exemplarily, for the rectangular shaped cell tray, the folded edge portion 20 includes two first folded edges 210 and two second folded edges 220, and the folded edge portion 20 is provided with 18 fourth through holes 260, in which case each first folded edge 210 is provided with 6 fourth through holes 260 and each second folded edge 220 is provided with 3 fourth through holes 260. It should be noted that the fourth through hole 260 may be a circular hole with a diameter of 7 mm.

In some embodiments, as shown in FIG. 2, the folded edge portion 20 is arranged with at least one direction-indicating slot 270, the direction-indicating slot 270 being in the shape of an arrow.

The at least 1 direction-indicating slot 270 may be arranged on the second folded edge 220. For example, for the rectangular shaped cell tray, each of the two second folded edges 220 is arranged with at least one direction-indicating slot 270. By providing the direction-indicating slot 270 on the folded edge portion 20, the assembly direction recognition of the cell tray is thereby improved, realizing the anti-dumbing of the battery module into a box.

In some embodiments, a battery module is further provided including multiple cells and the cell tray as in any of the above; the cells are arranged on the cell tray.

The specific description of the cells and the cell tray may be referred to the specific description of the cells and the cell tray in the above embodiments, which will not be repeated herein.

In the above-described embodiments, the cell tray includes a support portion, a folded edge portion, and a sidewall portion, the support portion defines multiple first through holes, and the multiple first through holes are in a one-to-one correspondence with cells; the folded edge portion is disposed on a periphery of the support portion, and the folded edge portion is arranged with a first bulge assembly, the first bulge assembly being configured to provide a gripping point to an assembly equipment; the sidewall portion is disposed between the support portion and the folded edge portion and is arranged with a chamfered structure, to realize easy assembly of the cell tray and the cells. In the present disclosure, the support portion, the folded edge portion, and the sidewall portion are disposed on the cell tray, with multiple first through holes defined on the support portion, and the sidewall portion is disposed between the support portion and the folded edge portion, with each of the first through holes corresponding to one cell; the chamfering structure is arranged on the sidewall portion, which is conducive to the stamping and molding of the cell tray and avoids the problem that the radius of the corners is too large and the number of the first through holes that can be provided in the corners of the support portion is reduced due to the restriction of the minimum rounded corners in the stamping process when the corners are provided directly with the rounded structure. Thereby, the corner positions of the support portion of the cell tray are fully utilized to provide more first through holes on the support portion, which may improve the utilization of the internal space of the cell tray. In this way, the support portion may be fitted with more cells, thereby increasing the energy density of the battery pack. By providing the first bulge assembly on the folded edge portion, it is convenient for the assembly equipment to grasp and assemble the cell tray through the first bulge assembly, such that the assembly of the cell tray is convenient and the assembly precision is improved.

## Claims

1. A cell tray, comprising:
a support portion, defining a plurality of first through holes; wherein the plurality of first through holes are in a one-to-one correspondence with cells;
a folded edge portion, disposed on a periphery of the support portion and arranged with a first bulge assembly; wherein the first bulge assembly is configured to provide a gripping point to an assembly equipment; and
a sidewall portion, disposed between the support portion and the folded edge portion and arranged with a chamfered structure.

2. The cell tray according to claim 1, wherein the folded edge portion comprises a plurality of first folded edges; the first bulge assembly comprises a plurality of first bulges;
each first folded edge is arranged with at least one of the plurality of first bulges, and the first bulges on each two of the plurality of first folded edges being opposite to each other are arranged in a staggered manner.

3. The cell tray according to claim 1, wherein the folded edge portion is further arranged with a second bulge assembly, the second bulge assembly being configured to provide a fixing point to a wire harness or a pipe.

4. The cell tray according to claim 3, wherein the folded edge portion further comprises a plurality of second folded edges; the second bulge assembly comprises a plurality of second bulges;
each second folded edge is arranged with at least one of the plurality of second bulges, and a second through hole is defined on a top of each second bulge; the second through hole is configured for aligning the wire harness or securing the pipe.

5. The cell tray according to claim 1, wherein the folded edge portion is further arranged with a third bulge assembly, the third bulge assembly being configured to provide a lifting point to the assembly equipment.

6. The cell tray according to claim 5, wherein the third bulge assembly comprises a plurality of third bulges; the folded edge portion comprises a first folded edge and a second folded edge, the first folded edge and the second folded edge being adjacent to each other;
a corresponding third bulge is arranged on a connection between the first folded edge and the second folded edge.

7. The cell tray according to claim 6, wherein each third bulge defines a third through hole, and the third through hole is arranged with a connection member.

8. The cell tray according to claim 4, wherein the folded edge portion further defines a positioning hole and a plurality of fourth through holes; the positioning hole is defined on a corresponding first folded edge or a corresponding second folded edge; the corresponding first folded edge is arranged with at least one of the plurality of fourth through holes, and the corresponding second folded edge is arranged with at least one of the plurality of fourth through holes.

9. The cell tray according to claim 1, wherein the folded edge portion is arranged with at least one direction-indicating slot in the shape of an arrow.

10. The cell tray according to claim 1, made from an aluminum alloy.

11. A battery module, comprising a plurality of cells and the cell tray according to any one of claims 1-10; wherein the plurality of cells are arranged on the cell tray.
